# DEMANDE DE BREVET EUROPEEN

(11) **EP 3 643 911 A1**
(43) Date de publication de la demande: **29.04.2020**
(21) Numéro de dépôt: 19205181.1
(22) Date de dépôt: 24.10.2019
(51) Int. Cl.: F03B 17/06

(54) **DISPOSITIFS DE CAPTATION D'ÉNERGIE DANS UN ÉCOULEMENT D'EAU DE SURFACE**

(30) Priorité: 24.10.2018 FR 1859842
(71) Demandeur: EEL ENERGY, 75007 Paris (FR)
(72) Inventeur: DREVET, Jean Baptiste, 75005 PARIS (FR); SYLVAIN, Franck, 75007 PARIS (FR); SARTIAUX, Christophe, PARIS 75007 (FR)
(74) Mandataire: Lavialle, Bruno François Stéphane

(57) **Abrégé**

Dispositif de captation d'énergie (1) dans un écoulement (E) d'eau de surface, comprenant :
- au moins un mécanisme de captation d'énergie (2) dans l'écoulement comprenant au moins une pièce de transmission mécanique (3) agencée pour se déplacer selon un mouvement alternatif lorsque ce mécanisme de captation (2) est plongé dans ledit écoulement (E) pour y capter de l'énergie ;
- au moins un convertisseur d'énergie mécanique (4) relié mécaniquement à ladite pièce de transmission mécanique (3) pour être actionné sous l'effet dudit déplacement alternatif de ladite pièce de transmission mécanique (3).

Le convertisseur d'énergie mécanique (4) est porté par un support (10) de manière à se trouver hors de l'écoulement (E) lorsque le mécanisme de captation d'énergie (2) est plongé dans cet écoulement (E) pour y capter de l'énergie.

## Description

L'invention concerne le domaine général des dispositifs de captation d'énergie dans un écoulement d'eau de surface.

### ARRIERE PLAN DE L'INVENTION

Il est connu, par exemple du document brevet WO2014191331A1 un dispositif de captation d'énergie dans un écoulement d'eau de surface.

Ce dispositif de captation comporte une membrane agencée pour onduler dans un écoulement de liquide, cette membrane appartenant à un mécanisme de captation d'énergie dans l'écoulement.

Ce dispositif comporte aussi un convertisseur d'énergie mécanique relié mécaniquement à la membrane via une pièce de transmission mécanique. Sous l'effet du déplacement de la membrane, la pièce de transmission mécanique se déplace selon un mouvement alternatif actionnant ainsi le convertisseur d'énergie mécanique.

Ce convertisseur d'énergie mécanique est ici intégralement porté par la membrane et il doit résister à une immersion permanente dans l'écoulement d'eau de surface.

La maintenance d'un tel dispositif de captation d'énergie nécessite l'intervention de plongeurs ce qui peut parfois complexifier les opérations de maintenance et augmenter les coûts d'une telle maintenance.

### OBJET DE L'INVENTION

Un objet de la présente invention est de fournir un dispositif de captation d'énergie permettant de limiter le besoin d'intervention de plongeurs au moins lors de certaines opérations de maintenance du dispositif.

### RESUME DE L'INVENTION

A cette fin, il est proposé selon l'invention un dispositif de captation d'énergie dans un écoulement d'eau de surface, comprenant :
- au moins un mécanisme de captation d'énergie dans l'écoulement comprenant au moins une pièce de transmission mécanique agencée pour se déplacer selon un mouvement alternatif lorsque ce mécanisme de captation est plongé dans ledit écoulement pour y capter de l'énergie ;
- au moins un convertisseur d'énergie mécanique relié mécaniquement (via une liaison mécanique) à ladite pièce de transmission mécanique pour être actionné sous l'effet dudit déplacement alternatif de la pièce de transmission mécanique.

Ce dispositif de captation d'énergie est essentiellement caractérisé en ce que le convertisseur d'énergie mécanique est porté par un support de manière à se trouver hors de l'écoulement lorsque le mécanisme de captation d'énergie est plongé dans cet écoulement pour y capter de l'énergie.

Pour la compréhension de l'invention, le terme écoulement d'eau de surface est synonyme du terme écoulement d'eau superficielle. L'écoulement d'eau de surface est constitué, par opposition aux écoulements d'eaux souterraines. Ainsi le terme écoulement d'eau de surface, désigne tout écoulement d'eau courante douce, saumâtre ou salée qui est en contact direct avec l'atmosphère terrestre et comprend l'écoulement d'un cours d'eau, c'est-à-dire l'écoulement d'un fleuve ou d'une rivière ou d'un lac, d'un océan ou une mer.

Grâce à l'invention, la plupart des opérations de maintenance réalisées au niveau du convertisseur d'énergie mécanique sont réalisées hors de l'eau et peuvent se faire sans intervention de plongeur.

Grâce à l'invention, comme le convertisseur d'énergie mécanique est prévu pour se trouver dans l'atmosphère, au-dessus de l'écoulement d'eau, il peut présenter des caractéristiques minimales d'étanchéité à l'eau ce qui permet d'en réduire grandement le coût de production.

Par ailleurs, les convertisseurs d'énergie mécaniques du marché adaptés sont en grande majorité développés pour fonctionner exclusivement en atmosphère gazeuse et très peu de ces convertisseurs d'énergie mécaniques sont adaptés à fonctionner en immersion dans un liquide.

Par sa conception, le dispositif de captation d'énergie selon l'invention peut être équipé de convertisseurs d'énergie disponibles sur le marché présentant des caractéristiques minimales d'étanchéité, c'est-à-dire une étanchéité à des projections d'eau, comme de l'eau de pluie.

L'invention permet d'utiliser des convertisseurs d'énergie moins couteux puisque moins exigeants en termes d'étanchéité à l'eau.

Le convertisseur d'énergie mécanique est adapté à convertir une énergie mécanique, reçue par déplacement alternatif de la pièce de transmission mécanique, en une autre forme d'énergie comme une énergie hydraulique ou une énergie pneumatique ou une énergie électrique.

Ainsi le convertisseur d'énergie mécanique peut être :
- une pompe pour pomper un liquide, cette pompe réalisant une conversion d'énergie mécanique en une énergie hydraulique ;
- un compresseur pour comprimer un gaz, ce compresseur réalisant une conversion d'énergie mécanique en une énergie pneumatique ;
- un générateur électrique, ce générateur réalisant une conversion d'énergie mécanique en une énergie électrique.

Préférentiellement, le convertisseur d'énergie mécanique est porté par un support de manière à se trouver à au moins 50 cm au-dessus de la surface de l'écoulement lorsque le mécanisme de captation d'énergie est plongé dans cet écoulement pour y capter de l'énergie. En éloignant le convertisseur de l'écoulement, on minimise le risque de son contact avec l'eau et on améliore ainsi sa durée de vie.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

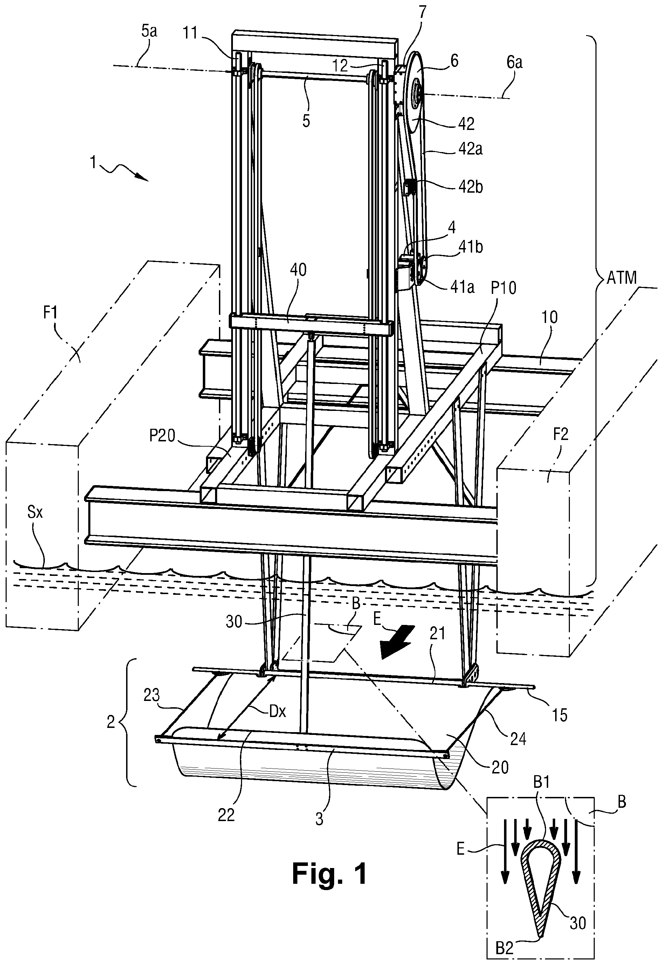

- La figure 1 représente une vue en perspective d'un premier mode de réalisation du dispositif de captation d'énergie 1 selon l'invention où le dispositif est équipé de flotteurs ;

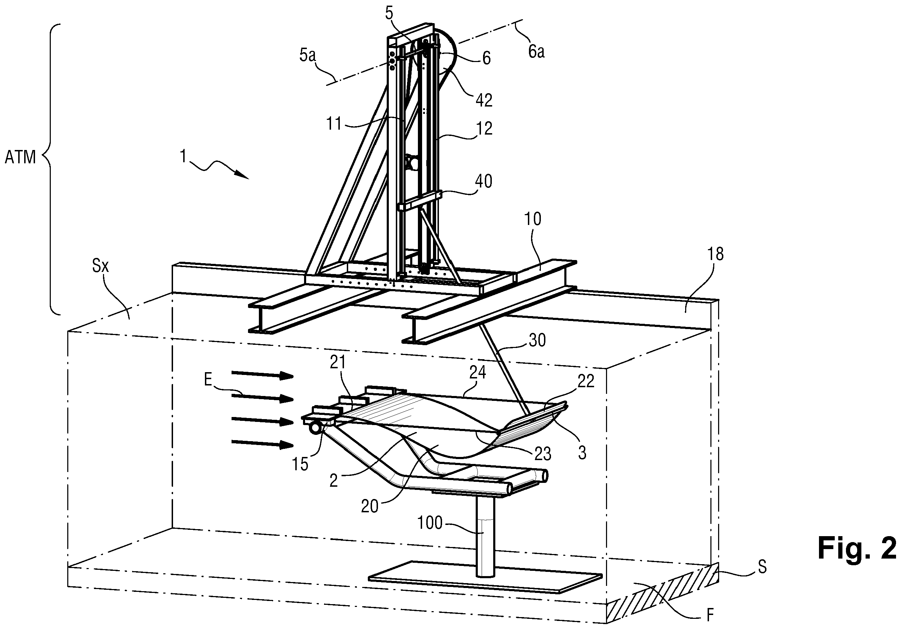

- La figure 2 présente une vue en perspective d'un deuxième mode de réalisation du dispositif selon l'invention, dans lequel le dispositif comporte un pied 100 portant la membrane en la maintenant immergée dans l'écoulement et un support 10 distinct (indépendant) du pied 100 pour porter le convertisseur d'énergie mécanique 4 hors de l'écoulement E, ce support 10 étant ici porté par des fondations 18 / des murs d'un canal.

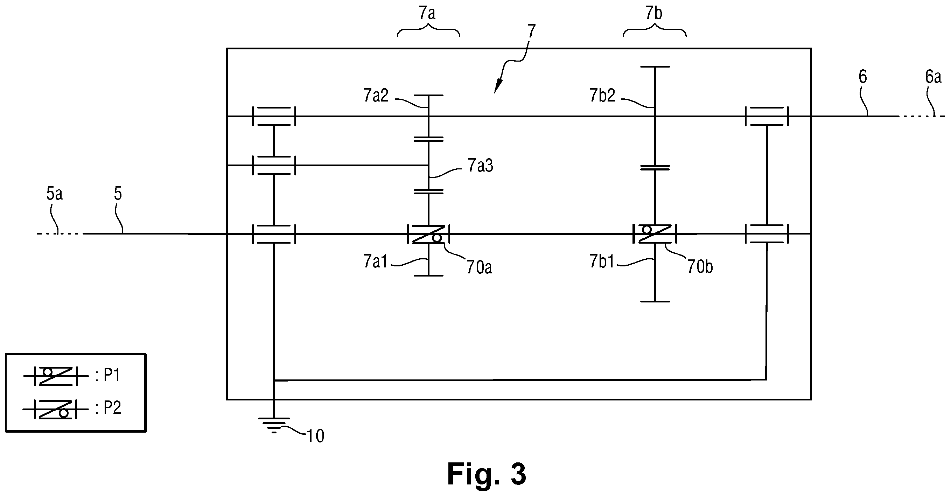

- La figure 3 illustre une partie du convertisseur d'énergie mécanique 4 qui comporte un arbre d'entrée 5, un arbre de sortie 6 et un équipement de transfert de couple 7 de cet arbre d'entrée 5 vers l'arbre de sortie 6 ;

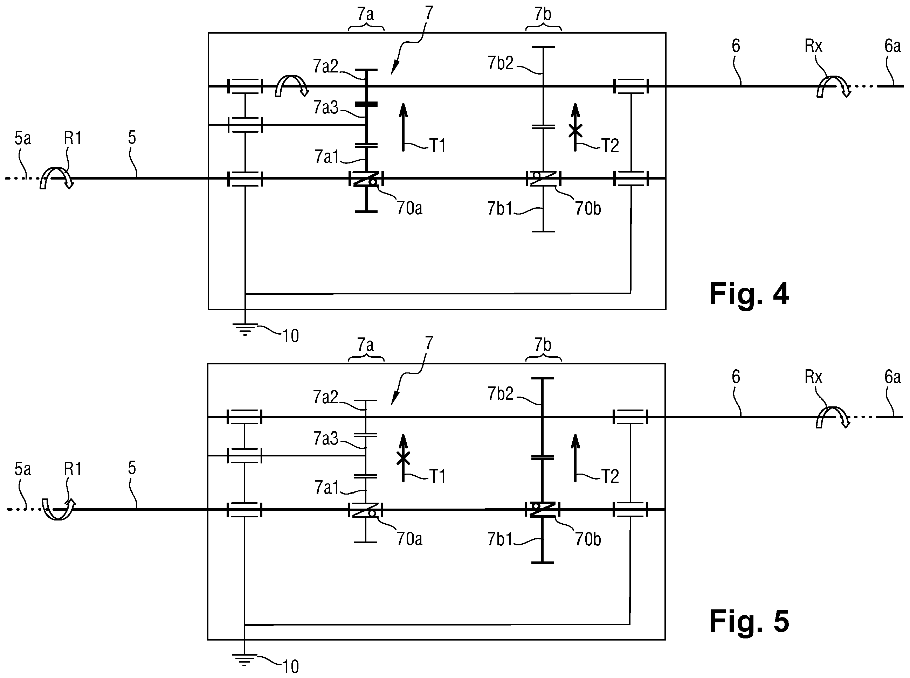

- La figure 4 illustre le fonctionnement de l'équipement de transfert de couple 7 dans le cas où l'arbre d'entrée est entrainé dans un sens de rotation horaire R1, l'arbre de sortie 6 étant alors entrainé à rotation par l'équipement de transfert de couple dans un sens de rotation donné Rx (ici Rx est en sens horaire) ;
- La figure 5 illustre le fonctionnement de l'équipement de transfert de couple 7 dans le cas où l'arbre d'entrée 5 est entrainé dans un sens de rotation antihoraire R2, l'arbre de sortie 6 étant alors entrainé à rotation par l'équipement de transfert de couple 7 dans le même dit sens de rotation donné Rx.

### DESCRIPTION DETAILLEE DE L'INVENTION

Comme indiqué précédemment, l'invention porte sur un dispositif de captation d'énergie 1 dans un écoulement E d'eau de surface.

L'écoulement E est par exemple un écoulement d'une rivière, d'un fleuve ou d'un courant marin ou océanique.

Ce dispositif de captation 1 comprend :
- au moins un mécanisme de captation d'énergie 2 dans l'écoulement E comprenant au moins une pièce de transmission mécanique 3 agencée pour se déplacer selon un mouvement alternatif lorsque ce mécanisme de captation 2 est plongé dans ledit écoulement E pour y capter de l'énergie ;
- au moins un convertisseur d'énergie mécanique 4 relié mécaniquement à ladite pièce de transmission mécanique 3 pour être actionné sous l'effet dudit déplacement alternatif de ladite pièce de transmission mécanique 3 ; et
- au moins un support 10 supportant le convertisseur d'énergie mécanique 4 de manière à ce que ce convertisseur d'énergie mécanique 4 se trouve hors de l'écoulement E lorsque le mécanisme de captation d'énergie 2 est plongé dans cet écoulement E pour y capter de l'énergie.

Le mécanisme de captation d'énergie 2 est adapté à capter de l'énergie mécanique dans l'écoulement E, cette énergie captée étant de l'énergie cinétique de l'écoulement E d'eau de surface.

Comme illustré sur les figures 1 et 2, le mécanisme de captation d'énergie 2 comporte une membrane 20 dotée d'un bord d'attaque 21 et d'un bord de fuite 22.

Cette membrane 20 est adaptée à onduler lorsqu'elle est plongée dans ledit écoulement E qui est préférentiellement laminaire.

La pièce de transmission mécanique 3 étant attachée fixement à ladite membrane 20 pour se déplacer avec la membrane 2.

Des liens souples 23, 24 s'étendent de part et d'autre de la membrane, en l'occurrence, ces liens 23, 24 se trouvent le long de bords latéraux de la membrane.

Ainsi, alors que la membrane ondule dans un volume d'ondulation, chacun de ces liens se déplace dans un volume de déplacement qui lui est propre et qui est à l'écart du volume d'ondulation. Ce volume d'ondulation de membrane se trouve entre les volumes de déplacement des liens ce qui limite le risque de contacts entre la membrane et les liens 23, 24.

Chaque lien souple 23, 24 est agencé pour s'opposer à l'écartement du bord d'attaque 21 vis-à-vis du bord de fuite 22 au-delà d'une distance maximale d'écartement Dx du bord d'attaque 21 vis-à-vis du bord de fuite 22.

Cette distance maximale d'écartement Dx est inférieure à une longueur de la membrane mesurée le long de cette membrane entre son bord d'attaque et son bord de fuite, la membrane étant ainsi contrainte à se recourber dans l'écoulement.

Sous l'effet de l'écoulement E, la courbure de la membrane a tendance à se déplacer le long de la membrane à la manière d'une onde. La répétition de ce mouvement génère un mouvement alternatif de la pièce de transmission mécanique 3 qui est fixée sur la membrane.

La liaison mécanique entre le convertisseur d'énergie mécanique 4 et la pièce de transmission mécanique 3 est réalisée via au moins un mat 30 et via un ensemble mobile 40 du convertisseur d'énergie mécanique 4.

Un premier côté / une première extrémité du mat 30 est articulé avec ladite pièce de transmission mécanique 3 et un second côté / une seconde extrémité du mat 30 est articulé avec ledit ensemble mobile 40 du convertisseur d'énergie mécanique 4.

Ainsi, l'ensemble mobile 40 du convertisseur d'énergie mécanique 4 est agencé pour que l'actionnement du convertisseur d'énergie mécanique 4 soit réalisé par déplacement de l'ensemble mobile 40 sous l'effet d'un déplacement dudit mat 30 occasionné par le déplacement alternatif de ladite pièce de transmission mécanique 3.

Comme on le comprend des figures 1 et 2, le support 10 comporte au moins un rail, en l'occurrence des premier et second rails 11, 12, et l'ensemble mobile 40 du convertisseur d'énergie mécanique 4 à la forme d'un chariot 40 monté coulissant suivant ce/ces rails 11, 12.

Préférentiellement, le mat 30 présente un profil qui lorsqu'observé dans un plan de coupe transversale B du mat 30 présente un bord d'attaque B1 et un bord de fuite B2. Le bord d'attaque B1 présente un rayon de courbure supérieur au rayon de courbure du bord de fuite B2.

Ainsi, le profil du mat est hydrodynamique et les pertes d'énergie liées au déplacement du mat 30 dans l'écoulement E sont minimisées.

Comme illustré aux figures 1 à 5, le convertisseur d'énergie mécanique 4 comporte préférentiellement un arbre d'entrée 5, un arbre de sortie 6 et un équipement de transfert de couple 7 de l'arbre d'entrée vers l'arbre de sortie.

L'arbre d'entrée 5 est agencé pour être entraîné à rotation selon un premier axe de rotation 5a sous l'effet dudit déplacement alternatif de ladite pièce de transmission mécanique 3.

A cette fin, le convertisseur d'énergie 4 comporte des première et seconde courroies qui sont respectivement attachées à l'ensemble mobile 40, c'est-à-dire au chariot 40 et respectivement enroulées autour de première et seconde poulies portée par l'arbre d'entrée 5.

Ainsi, le déplacement axial du chariot 40 le long des rails 11, 12 entraine une tension de ces courroies et une rotation de l'arbre d'entrée 5 donc un sens de rotation horaire ou anti horaire qui dépend du sens de déplacement du chariot 40.

Le support 10 comporte aussi des troisième et quatrième poulies permettant de tendre les première et seconde courroies et ainsi favoriser le transfert d'énergie du chariot 40 vers l'arbre d'entrée 5.

Les points d'attache de ces deux courroies sur le chariot 40 sont placés à équidistance du pivot articulant le mat 30 au chariot 40.

Ceci permet une répartition symétrique des efforts du mat 30 vers les courroies.

Pour la compréhension de l'invention, le terme courroie désigne soit une courroie dans son sens généralement admis, soit une chaîne de transmission de mouvement.

Le dispositif de captation d'énergie 1 peut aussi comporter une coque entourant l'équipement de transfert de couple 7 pour le protéger des intempéries. Cette coque peut comporter un premier passage pour permettre le passage de l'arbre d'entrée 5 au travers de la paroi de la coque et un second passage pour permettre le passage de l'arbre de sortie 6 au travers de la paroi de la coque.

Idéalement, pour limiter le passage de contaminants vers une zone interne à la coque, une première zone d'étanchéité est formée autour de l'arbre d'entrée 5, entre cet arbre 5 et la coque et une seconde zone d'étanchéité est formée autour de l'arbre de sortie 6, entre cet arbre 6 et la coque.

Cette coque présente préférentiellement un ou plusieurs capots amovibles pour accéder à l'équipement de transfert de couple 7.

Comme on le comprend des figures 3 à 5, l'équipement de transfert de couple 7 est agencé pour que :
- d'une part sous l'effet de la rotation de l'arbre d'entrée 5 suivant un sens de rotation horaire R1, cet équipement de transfert 7 entraîne l'arbre de sortie 6 à rotation dans un sens de rotation donné Rx selon un second axe de rotation 6a ; et que
- d'autre part, sous l'effet de la rotation de l'arbre d'entrée 5 suivant un sens de rotation antihoraire R2, cet équipement de transfert 7 entraîne l'arbre de sortie 6 à rotation dans le même dit sens de rotation donné Rx selon ledit second axe de rotation 6.

L'équipement de transfert de couple 7 comporte :
- un premier ensemble 7a de roues dentées 7a1, 7a2, 7a3 engrenées entre elles ; et
- un second ensemble 7b de roues dentées 7b1, 7b2 engrenées entre elles.

Une première des roues dentées du premier ensemble de roues dentées 7a1 est portée par ledit arbre d'entrée 5 alors qu'une deuxième de ces roues dentées du premier ensemble de roues dentées 7a2 est portée par l'arbre de sortie 6.

Ces première et deuxième roues dentées 7a1, 7a2, 7a3 du premier ensemble de roues dentées 7a sont agencées pour que lorsque la première roue dentée est mise en rotation dans un sens de rotation sélectionné parmi un sens de rotation horaire et un sens de rotation antihoraire alors la deuxième de ces roues dentées tourne dans ce même sens de rotation sélectionné R1, Rx.

La première des roues dentées 7b1 du second ensemble de roues dentées 7b est portée par ledit arbre d'entrée 5 et la deuxième des roues dentées 7b2 du second ensemble de roues dentées 7b est portée par l'arbre de sortie 6.

Ces première et deuxième roues dentées 7b1, 7b2 du second ensemble 7b sont agencées pour que lorsque la première de ces roues dentées 7b1 est mise en rotation dans un sens de rotation sélectionné parmi un sens de rotation horaire et un sens de rotation antihoraire alors la deuxième de ces roues dentées 7b2 tourne dans un sens de rotation contraire au sens de rotation sélectionné R2, Rx.

Par ailleurs, l'équipement de transfert de couple 7 comporte des premier et second pivots unidirectionnels 70a, 70b (le terme pivot unidirectionnel est ici synonyme de roue libre).

Le motif P1 en légende de la figure 3 présente un cercle au-dessus d'un axe symbolisant un axe de rotation.

Ce motif P1 représente une roue libre qui est motrice lorsqu'elle est entraînée dans le sens de rotation horaire R1 et qui est libre lorsqu'elle est entraînée dans le sens de rotation antihoraire R2.

Le motif P2 en légende de la figure 3 présente un cercle au-dessous d'un axe symbolisant un axe de rotation.

Ce motif P2 représente une roue libre qui est motrice lorsqu'elle est entraînée dans le sens de rotation antihoraire R2 et qui est libre lorsqu'elle est entraînée dans le sens de rotation horaire R1.

Comme on le comprend des figures 4 et 5, le premier pivot unidirectionnel 70a est disposé pour qu'un couple d'entraînement T1 puisse être transféré, via de premier pivot unidirectionnel 70a, de l'arbre d'entrée 5 vers l'arbre de sortie 6 uniquement lorsque l'arbre d'entrée 5 tourne dans son sens de rotation horaire R1.

Le second pivot unidirectionnel 70b est disposé pour qu'un couple d'entraînement T2 puisse être transféré, via le second pivot unidirectionnel 70b, de l'arbre d'entrée 5 vers l'arbre de sortie 6 uniquement lorsque l'arbre d'entrée 5 tourne dans son sens de rotation antihoraire R2.

Ainsi, le couple d'entraînement est transmis de l'arbre d'entrée 5 vers l'arbre de sortie 6 via le seul premier pivot unidirectionnel 70a lorsque l'arbre d'entrée 5 tourne dans son sens de rotation horaire R1 et il est transmis via le seul second pivot unidirectionnel 70b lorsque l'arbre d'entrée 5 tourne dans son sens de rotation antihoraire R2.

En d'autres termes, le premier pivot unidirectionnel 70a est disposé pour transmettre un couple d'entraînement de l'arbre d'entrée 5 vers l'arbre de sortie 6, via ce premier pivot unidirectionnel 70a, lorsque l'arbre d'entrée 5 tourne dans son sens de rotation horaire R1 et pour qu'aucun couple d'entraînement ne soit transmis, de l'arbre d'entrée 5 vers l'arbre de sortie 6, via ce premier pivot unidirectionnel 70a lorsque cet arbre d'entrée 5 tourne dans son sens de rotation antihoraire R2.

Le second pivot unidirectionnel 70b est disposé pour transmettre un couple d'entraînement de l'arbre d'entrée 5 vers l'arbre de sortie 6, via ce second pivot unidirectionnel 70b, lorsque l'arbre d'entrée 5 tourne dans son sens de rotation antihoraire R2 et pour qu'aucun couple d'entraînement ne soit transmis, de l'arbre d'entrée 5 vers l'arbre de sortie 6, via ce second pivot unidirectionnel 70b lorsque cet arbre d'entrée 5 tourne dans son sens de rotation horaire R1.

Ainsi, l'arbre de sortie 6 est toujours entraîné à rotation dans un même sens de rotation Rx.

Comme indiqué précédemment, le convertisseur d'énergie mécanique 4 peut comporter au moins un élément de conversion, en l'occurrence deux éléments de conversion 41a, 41b ou plus.

Chaque élément de conversion 41a, 41b est couplé mécaniquement, via un mécanisme coupleur, à l'arbre de sortie 6 pour convertir une énergie de rotation de l'arbre de sortie 6 dans son sens de rotation Rx en une autre forme d'énergie.

Un élément de conversion 41a, 41b est peut être une pompe pour pomper un liquide, un compresseur pour comprimer un gaz ou préférentiellement un générateur électrique pour générer une énergie électrique.

Dans le cas présent, les éléments de conversion 41a et 41b sont deux générateurs d'électricité actionnés en parallèle via le mécanisme coupleur.

Ceci permet d'avoir une redondance dans la conversion en énergie électrique.

Pour permettre d'ajuster le fonctionnement du dispositif de captation d'énergie 1, le convertisseur d'énergie mécanique 4 peut aussi comporter une ou plusieurs masses d'inertie qui est/sont préférentiellement amovible(s).

De telles masses d'inertie peuvent être prévues pour que, dans des conditions d'écoulement E données, une vitesse minimale d'entraînement des éléments de conversion 41a, 41b soit maintenue entre deux mouvements alternatifs du mécanisme de captation d'énergie 2.

Une ou plusieurs de ces masses d'inertie peut être portée par l'arbre de sortie 6, à l'intérieur ou à l'extérieur de ladite coque.

Une ou plusieurs de ces masses d'inertie peut être portée par une poulie de sortie 42 et/ou par un des éléments de conversion 41a, 41b et/ou par un mécanisme placé entre l'arbre de sortie 6 et l'un des éléments de conversion 41a, 41b.

Le mécanisme coupleur peut comporter une roue libre 42 permettant de transférer un couple moteur de l'arbre de sortie 6 vers l'élément de conversion uniquement lorsque cet arbre de sortie 6 est entraîné dans son sens de rotation Rx qui est invariant.

Grâce à cette roue libre 42, le risque de transfert d'énergie de l'élément de conversion 41a, 41b vers l'arbre de sortie 6 est supprimé ce qui permet d'éviter une perte d'énergie et un risque de casse du dispositif de captation d'énergie 1.

Ainsi, si l'élément de conversion 41a, 41b venait, sous l'effet de sa propre inertie, à entraîner la roue libre 42 à une vitesse supérieure à la vitesse de rotation de l'arbre de sortie 6 selon son sens de rotation unique Rx, alors cette roue libre 42 réaliserait un découplage mécanique interdisant le transfert d'énergie de l'élément de conversion 41a, 41b vers l'arbre de sortie.

Le mécanisme coupleur peut comporter
- une poulie de sortie portée par l'arbre de sortie 6, cette poulie de sortie pouvant être constituée par la roue libre 42 ;
- une poulie d'entraînement pour chaque élément de conversion 41a, 41b ;
- une courroie de couplage 42a s'étendant autour de la poulie de sortie 42 et autour de chaque poulie d'entraînement d'élément de conversion 41a, 41b ; et
- un galet tendeur 42b de la courroie de couplage 42a.

Chaque élément de conversion 41a, 41b est tel qu'il réalise une conversion d'énergie lorsque sa poulie d'entrainement est mise en rotation sous l'effet de la courroie de couplage 42a.

Ainsi, sous l'effet de l'écoulement E, le mécanisme de captation d'énergie 2 se met à onduler et déplace le mat 30 selon un mouvement alternatif. Ce mouvement alternatif du mat 30 déplace le chariot 40 selon un mouvement alternatif linéaire du chariot.

Ce mouvement alternatif linéaire du chariot 40 entraîne une rotation alternative de l'arbre d'entrée 5 qui est transformée en un mouvement de rotation de l'arbre de sortie 6 suivant un sens de rotation uniforme Rx.

Ce mouvement de rotation de l'arbre de sortie entraîne le déplacement des éléments de conversion 41a, 41b qui réalisent alors la conversion d'énergie mécanique vers une autre forme d'énergie qui est ici de l'électricité.

Le mécanisme de captation d'énergie 2 et le support 10 utilisés pour mettre en œuvre le dispositif de captation d'énergie 1 selon l'invention vont maintenant être décrits plus en détail.

Selon le cas, le bord d'attaque 21 de la membrane peut être attaché soit au support 10, comme sur la figure 1, soit à un pied 100 comme sur la figure 2.

Ces deux liens souples 23, 24 sont ici réalisés par deux câbles mais ils pourraient être réalisés avec des courroies, ou des chaînes.

Chaque lien souple 23, 24 présente une première extrémité terminale et une seconde extrémité terminale qui lui sont propres.

Dans le mode de réalisation de la figure 1, les premières extrémités terminales de chacun de ces liens 23, 24 sont reliées au support 10, en l'occurrence à des extrémités terminales d'une pièce allongée 15 du support, ces premières extrémités terminales des liens souples 23, 24 étant placées de part et d'autre du bord d'attaque 21 de la membrane 2.

Dans le mode de réalisation de la figure 2, les premières extrémités terminales de chacun de ces liens 23, 24 sont reliées au pied 100, en l'occurrence à des extrémités terminales d'une pièce allongée 15 portée par ce pied 100, ces premières extrémités terminales des liens souples 23, 24 étant placées de part et d'autre du bord d'attaque 21 de la membrane 2.

Dans chaque mode de réalisation des figures 1 et 2, les secondes extrémités terminales de chacun de ces liens souples 23, 24 sont reliées à des extrémités terminales de la pièce de transmission mécanique 3 qui sont situées de part et d'autre du bord de fuite 22 de la membrane 2.

Préférentiellement, ces liens souples 23, 24 sont tels que la distance maximale d'écartement Dx du bord d'attaque de la membrane vis-à-vis du bord de fuite de la membrane est d'au plus 80% de la longueur de la membrane 2 mesurée le long de la membrane 2 entre son bord d'attaque 21 et son bord de fuite 22.

Ainsi, les liens forcent une courbure de la membrane ce qui favorise une ondulation de la membrane plongée dans l'écoulement E.

Dans le cas de la figure 1, le support 10 comporte au moins un flotteur, en l'occurrence deux flotteurs F1, F2, pour permettre au dispositif de captation 1 de flotter lorsqu'il est placé sur un volume d'eau douce ayant une surface supérieure Sx en contact direct avec l'atmosphère terrestre ATM, ce volume d'eau douce constituant ledit écoulement E.

Grâce à ce support équipé de flotteur (s), le mécanisme de captation 2 se trouve positionné dans l'écoulement alors que le convertisseur d'énergie mécanique 4 se trouve au-dessus de ladite surface supérieure Sx, préférentiellement à plusieurs dizaines de centimètres de cette surface Sx.

Dans ce mode de réalisation de la figure 1, la membrane est intégralement supportée par le support.

Il est bien entendu imaginable que ce ou ces flotteurs F1, F2 soient remplacés par une structure en appui sur le sol comme des piliers porteurs du support ou des murs dotés de fondations.

Dans le mode de réalisation de la figure 2, le pied 100 distinct du support 10 repose sur un fond F au-dessus duquel se trouve l'écoulement E, le bord amont de la membrane 21 étant attaché au support.

Dans ce mode de la figure 2, le support 10 comporte aussi des fondations 18 pour venir se fixer sur un sol S et ainsi positionner le mécanisme de captation 2 dans ledit écoulement E tout en maintenant l'intégralité dudit convertisseur d'énergie mécanique 4 à plusieurs dizaines de centimètres au-dessus dudit écoulement.

Le support 10 est préférentiellement formé en au moins une première et une deuxième parties P10, P20 qui sont reliées entre elles pour pouvoir adopter alternativement une pluralité de positions relatives entre ces première et deuxième parties.

La première de ces parties P10 du support comporte une zone d'attache du bord amont de la membrane 20, en l'occurrence la zone comprenant la pièce allongée 15 du support.

La deuxième de ces parties P20 du support est celle comportant les rails de guidage 11, 12.

Le dispositif de captation d'énergie est tel qu'à chaque position relative donnée entre ces première et deuxième parties P10, P20 correspond une distance donnée d'éloignement entre les rails 11, 12 et la zone d'attache du bord amont de la membrane de manière qu'en passant d'une position relative donnée à une autre de ces positions relatives données, on fait varier la distance d'éloignement entre les rails 11, 12 et la zone d'attache de la membrane.

Ceci permet d'adapter les dimensions du support 10 en fonction des dimensions de la membrane 20 choisie et de ses caractéristiques d'oscillation dans l'écoulement E.

## Revendications

1. Dispositif de captation d'énergie (1) dans un écoulement (E) d'eau de surface, comprenant :
- au moins un mécanisme de captation d'énergie (2) dans l'écoulement comprenant au moins une pièce de transmission mécanique (3) agencée pour se déplacer selon un mouvement alternatif lorsque ce mécanisme de captation (2) est plongé dans ledit écoulement (E) pour y capter de l'énergie ;
- au moins un convertisseur d'énergie mécanique (4) relié mécaniquement à ladite pièce de transmission mécanique (3) pour être actionné sous l'effet dudit déplacement alternatif de ladite pièce de transmission mécanique (3), **caractérisé en ce que** le convertisseur d'énergie mécanique (4) est porté par un support (10) de manière à se trouver hors de l'écoulement (E) lorsque le mécanisme de captation d'énergie (2) est plongé dans cet écoulement (E) pour y capter de l'énergie.

2. Dispositif de captation (1) selon la revendication 1, dans lequel le convertisseur d'énergie mécanique (4) comporte un arbre d'entrée (5), un arbre de sortie (6) et un équipement de transfert de couple (7) de l'arbre d'entrée vers l'arbre de sortie ;
- l'arbre d'entrée (5) étant agencé pour être entraîné à rotation selon un premier axe de rotation (5a) sous l'effet dudit déplacement alternatif de ladite pièce de transmission mécanique (3) ; et
l'équipement de transfert de couple (7) étant agencé pour que :
- d'une part sous l'effet de la rotation de l'arbre d'entrée (5) suivant un sens de rotation horaire (R1), cet équipement de transfert (7) entraîne l'arbre de sortie (6) à rotation dans un sens de rotation donné (Rx) selon un second axe de rotation (6a) ; et que
- d'autre part, sous l'effet de la rotation de l'arbre d'entrée (5) suivant un sens de rotation antihoraire (R2), cet équipement de transfert (7) entraîne l'arbre de sortie (6) à rotation dans le même dit sens de rotation donné (Rx) selon ledit second axe de rotation (6).

3. Dispositif de captation selon la revendication 2, dans lequel l'équipement de transfert de couple (7) comporte :
- un premier ensemble (7a) de roues dentées (7a1, 7a2, 7a3) engrenées entre elles, une première de ces roues dentées du premier ensemble de roues dentées (7a1) étant portée par ledit arbre d'entrée (5) alors qu'une deuxième de ces roues dentées du premier ensemble de roues dentées (7a2) est portée par l'arbre de sortie (6), ces première et deuxième roues dentées (7a1, 7a2, 7a3) du premier ensemble de roues dentées (7a) étant agencées pour que lorsque la première de ces roues dentées (7a1) est mise en rotation dans un sens de rotation sélectionné parmi un sens de rotation horaire et un sens de rotation antihoraire alors la deuxième de ces roues dentées (7a2) tourne dans ce même sens de rotation sélectionné (R1, Rx) ; et
- un second ensemble (7b) de roues dentées (7b1, 7b2) engrenées entre elles, une première de ces roues dentées (7b1) du second ensemble de roues dentées (7b) étant portée par ledit arbre d'entrée (5) alors qu'une deuxième de ces roues dentées (7b2) du second ensemble de roues dentées (7b) est portée par l'arbre de sortie, ces première et deuxième roues dentées (7b1, 7b2) du second ensemble (7b) étant agencées pour que lorsque la première de ces roues dentées (7b1) est mise en rotation dans un sens de rotation sélectionné parmi un sens de rotation horaire et un sens de rotation antihoraire alors la deuxième de ces roues dentées (7b2) tourne dans un sens de rotation contraire au sens de rotation sélectionné (R2, Rx).

4. Dispositif de captation d'énergie selon l'une quelconque des revendications 2 ou 3, dans lequel :
- l'équipement de transfert de couple (7) comporte des premier et second pivots unidirectionnels (70a, 70b) ;
- le premier pivot unidirectionnel (70a) étant disposé pour qu'un couple d'entraînement puisse être transféré (T1), via de premier pivot unidirectionnel (70a), de l'arbre d'entrée (5) vers l'arbre de sortie (6) uniquement lorsque l'arbre d'entrée (5) tourne dans son sens de rotation horaire (R1), et
- le second pivot unidirectionnel (70b) étant disposé pour qu'un couple d'entraînement puisse être transféré (T2), via le second pivot unidirectionnel (70b), de l'arbre d'entrée (5) vers l'arbre de sortie (6) uniquement lorsque l'arbre d'entrée (5) tourne dans son sens de rotation antihoraire (R2).

5. Dispositif de captation d'énergie (1) selon l'une quelconque des revendications 1 à 4, dans lequel la liaison mécanique entre le convertisseur d'énergie mécanique (4) et la pièce de transmission mécanique (3) est réalisée via au moins un mat (30) et via un ensemble mobile (40) du convertisseur d'énergie mécanique (4), un premier côté du mat (30) étant articulé avec ladite pièce de transmission mécanique (3) et un second côté du mat (30) étant articulé avec ledit ensemble mobile (40) du convertisseur d'énergie mécanique (4).

6. Dispositif de captation d'énergie selon la revendication 5, dans lequel ledit support (10) comporte au moins un rail (11, 12), l'ensemble mobile (40) du convertisseur d'énergie mécanique étant un chariot (40) monté coulissant suivant ledit au moins un rail (11, 12) du support (10).

7. Dispositif de captation d'énergie selon l'une quelconque des revendications 5 ou 6, dans lequel ledit mat (30) présente un profil observé dans un plan de coupe transversale (B) du mat (30) ayant un bord d'attaque (B1) et un bord de fuite (B2), le bord d'attaque (B1) ayant un rayon de courbure supérieur au rayon de courbure du bord de fuite (B2).

8. Dispositif de captation d'énergie selon l'une quelconque des revendications 1 à 7, dans lequel le mécanisme de captation d'énergie (2) comporte une membrane (20) dotée d'un bord d'attaque (21) et d'un bord de fuite (22), la membrane (20) étant adaptée à onduler lorsqu'elle est plongée dans ledit écoulement (E), la pièce de transmission mécanique (3) étant attachée fixement à ladite membrane (20) pour se déplacer avec la membrane (2).

9. Dispositif de captation selon la revendication 8, dans lequel le bord d'attaque (21) de la membrane (2) est attaché au support (10).

10. Dispositif de captation selon la revendication 8, dans lequel le bord d'attaque (21) de la membrane (2) est attaché à un pied (100) distinct du support (10), ce pied étant destiné à reposer sur un fond (F) au-dessus duquel se trouve l'écoulement (E).

11. Dispositif de captation selon l'une quelconque des revendications 8 à 10, dans lequel des liens souples (23, 24) s'étendent de part et d'autre de la membrane, chaque lien souple (23, 24) étant agencé pour s'opposer à l'écartement du bord d'attaque (21) de la membrane (2) vis-à-vis du bord de fuite (22) de la membrane (2) au-delà d'une distance maximale d'écartement (Dx) du bord d'attaque de la membrane vis-à-vis du bord de fuite de la membrane, cette distance maximale d'écartement (Dx) étant inférieure à une longueur de la membrane mesurée le long de cette membrane entre son bord d'attaque et son bord de fuite.

12. Dispositif de captation selon l'une quelconque des revendications 1 à 11, dans lequel le support 10 comporte des fondations (18) pour venir se fixer sur un sol (S) et ainsi positionner le mécanisme de captation (2) dans ledit écoulement (E) tout en maintenant l'intégralité dudit convertisseur d'énergie mécanique (4) à plusieurs dizaines de centimètres au-dessus dudit écoulement.

13. Dispositif de captation selon l'une quelconque des revendications 1 à 11, dans lequel dans lequel le support (10) comporte au moins un flotteur (F1, F2) pour permettre au dispositif de captation (1) de flotter lorsqu'il est placé sur un volume d'eau douce ayant une surface supérieure (Sx) en contact direct avec l'atmosphère terrestre (ATM), ce volume d'eau douce constituant ledit écoulement (E), le mécanisme de captation (2) étant alors positionné dans cet écoulement alors que ledit convertisseur d'énergie mécanique (4) se trouve au-dessus de ladite surface supérieure (Sx).
